# EUROPEAN PATENT APPLICATION

(11) **EP 1 837 606 A2**
(43) Date of publication of application: **26.09.2007**
(21) Application number: 07104643.7
(22) Date of filing: 22.03.2007
(51) Int. Cl.: F24D 19/10

(54) **A method and system for controlling a heating plant**

(30) Priority: 24.03.2006 IT MI20060552
(71) Applicant: Russi, Franco, 65125 Pescara (IT); Russi, Massimo, 65125 Pescara (IT); Russi, Luigi, 12100 Cuneo (IT); Del Col, Ugo Enrico, 20129 Milano (IT)
(72) Inventor: RUSSI, Franco, 65125, PESCARA (IT)
(74) Representative: Coppo, Alessandro

(57) **Abstract**

A system for controlling a heating plant comprising a boiler (2) inside of which there is a chamber for heating a liquid, a plurality of feed pipes (3) through which the hot liquid is fed into a plurality of radiators (4) and a plurality of return pipes (5) by means of which the radiator liquid is returned to the boiler. An environmental thermostat (6) is adapted to measuring the temperature of the environment. The system comprises a control unit, supplied directly by an electrical feed, and connected to the environmental thermostat (6) and the boiler (2), and connected in such a way that when the thermostat automatically starts-up the boiler, the control unit defines the boiler on and off times, in a variable manner depending on pre-set activation times.

## Description

The present invention relates to a method and a system for controlling a heating plant.

It is well known that a heating plant comprises a boiler, inside of which there is a chamber for heating a liquid, a plurality of feed pipes through which hot water is fed into a plurality of radiators and a plurality of return pipes, by means of which the radiator liquid is returned to the boiler.

Furthermore, the plant normally comprises an environmental thermostat for measuring the temperature of the environment in which the plant is operating and which controls the start-up and shut-down of the boiler itself. In order to comply with current legal requirements pertaining to plant operating times and temperatures, with prior programming, modern thermostats are capable of starting-up or shutting-down heating plant at the desired times and increasing or decreasing the environmental temperature within the desired time bands. Furthermore, current plants are fitted with a thermostat inside the boiler and a regulator which measures the temperature of the liquid entering the boiler; if the temperature value measured is less than that set, then the boiler continues to supply the flame to the heating chamber and furthermore continues to circulate liquid by means of the motor/pump; if the value measured is above the value set by a margin of at least 10% (the typical factory default value set by the manufacturer), the boiler stops the flame in the heating chamber, while the motor/pump continues operating so as to keep the liquid in the plant circulating. As soon as the liquid temperature drops by a few degrees, the flame in the chamber is restarted until the preset value is reached, which will then result in the heating being shut-down.

The applicant has observed that when a heating plant is started up, the liquid emerges from the boiler at a very high temperature, for example even 90°, and begins flowing through the pipes and into the radiators, heating them and cooling drastically, thus re-entering the boiler at a temperature close to that of the surrounding environment (i.e. cold). Furthermore, the system normally takes a few minutes (depending on the size of the plant) to bring the liquid to working temperature, i.e. equal to the temperature set. In practice, it takes several minutes to bring the radiators to a temperature close to operating temperature.

Thus the radiators remain heated for several minutes, and during that time, they cool down releasing their heat to the surrounding environment.

The applicant has observed that, as the environment heats up little by little, the radiators take much longer to cool down, and the more the environmental temperature is raised, the more time the radiators take to cool down. Furthermore, it has been observed that, when the radiators are cooling, and have lost 10 - 15° with respect to the operating temperature, by supplying them with heating liquid for a few minutes, they only take a few minutes to return to a temperature more suitable to the correct heating of the environment.

The applicant has analysed radiator heating and cooling times by subsequently performing the following operations a pre-set number of times:
- measuring the time required for the radiators to cool, not entirely, but to a predefined temperature;
- starting-up the heating plant and measuring the time required for the same to bring the radiators to the previous temperature,
- once said temperature is reached, once more shutting-down the heating plant until the radiators have cooled partially.

From the above measurements, it has been observed that the more the environment heat up and the warmer it is, the less time is required to maintain the radiators at the operating temperature, and once the environment is heated, the longer it takes for the radiators to partially cool, and it has been observed overall that only a few hours in total are required to heat the environment 24 hours a day. In practice, the more the environment are kept continually warm, the better the yield of the system, or rather the less the fuel consumption, so that savings of even 70% can be achieved in relation to the plant itself.

The advantage is decidedly greater if considering that the same plant consumes N if kept on only for the hours agreed by law, while it consumes N/3 or at most N/2, taking into account however benefiting from heating 24 hours per day.

According to the present invention, the boiler on/off cycles optimising consumption with respect to the temperature that it is desired to maintain in the environment according to the aforementioned criteria can be achieved automatically by means of an electronic processing unit that can be connected to the boiler and to the temperature monitoring thermostat.

One aspect of the present invention relates to a system according to that described in claim 1.

One further aspect of the present invention relates to a method according to that described in claim 3.

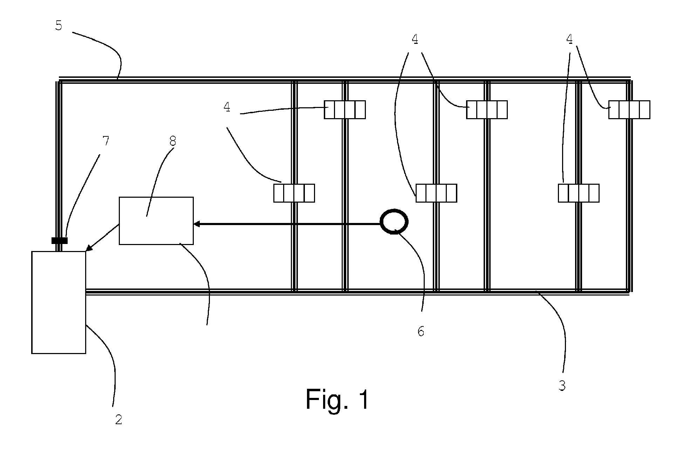

The characteristics and advantages of the method and the system according to the present invention will become clearer and more obvious from the following nonlimiting, exemplifying description of one embodiment of the invention with reference to the enclosed figures wherein
- figure 1 represents a schematic diagram of a heating plant according to the present invention;
- figure 2 shows one possible schema of the control unit according to the present invention.

With reference to the above figures, the heating plant comprises a boiler 2 inside of which there is a chamber for heating a liquid, a plurality of feed pipes 3 through which hot water is fed into a plurality of radiators 4 and a plurality of return pipes 5 by means of which the radiator liquid is returned to the boiler. Furthermore, the plant normally comprises an environmental thermostat 6 for measuring the temperature of the environment in which the plant is operating and which controls the start-up and shut-down of the boiler itself, and a thermostat 7 inside the boiler and a related regulator.

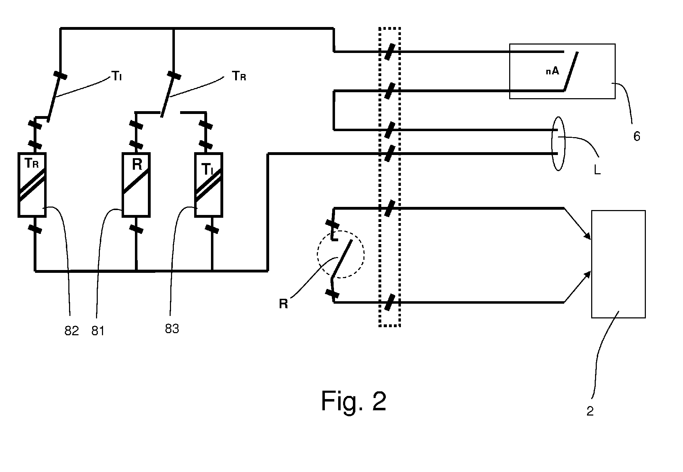

Figure 2 shows an electronic control unit, supplied directly by an electrical feed line L and capable of controlling the plant connected to the environmental thermostat 6 and the boiler 2 of the plant itself.

Said unit preferably comprises a relay for starting up the boiler 81, a first programmable timer 82 which starts said relay and a second programmable timer 83, arranged in parallel with said relay and capable of shutting down said first timer, so that when the thermostat automatically starts the boiler, the two timers determine the shut-down and start-up times in a variable manner, according to the preset activation times.

Thus the thermostat starts-up and shuts-down the unit when the environmental temperature drops, the thermostat contact closes and the unit is thus electrically live. The relay 81 is energised and closes the breaker R in order to start-up the boiler.

The timer 82 starts counting and, upon reaching the preset time, is energised thus activating the breaker Tr. After this, the relay 81 is de-energised and opens breaker R, thus shutting-down the boiler.

The timer 83 in parallel with the relay 81 starts counting, and, upon reaching the set time is energised, thus opening the contact of breaker Ti causing the de-energising of the timer 82 which returns to the start condition, i.e. with the energising of relay 81 which in turn reactivates the boiler and returns it to the default state.

Alternatively, by using two timers with three breakers, the relay can be superfluous, by using one of the breakers of the two timers as the boiler activating switch.

Furthermore, according to the present invention, in order to contribute to the overall automation of the system, it is possible to install a temperature detector on the most distant radiator, connected wirelessly with the unit controlling the boiler, and the starting-up/shutting-down of the boiler itself is controlled by the temperature measured at said radiator.

The above-mentioned system may be made to work as described above in the following manner.

Setting the environmental thermostat at a preset temperature, for example 20°C, without introducing any limitations in the time bands or in the temperature fluctuations within any of said time bands, so that the plant operates uninterrupted.

Setting the operating temperature of the boiler heating liquid for example at 70°C, or in the case of a boiler without any direct temperature measurement, setting the thermostat close to the maximum value (e.g. numbers ranging from 1 to 8, set at 7, or almost at full scale for other boilers). This stage may be defined as a calibration stage, while the operational stages of the method are listed below.
1. Starting up the plant and measuring the time the radiator located most distant from the boiler takes to heat up completely, ensuring that the temperature is more or less uniform over the entire radiator, remembering the time required.
2. Shutting down the plant and waiting for the length of time necessary for the radiator in question to cool down, or rather the time required for the temperature of the radiator to drop by at least 15 - 20 degrees, with respect to the value achieved, and store the the time required.
3. Restarting the boiler for the amount of time necessary to ensure that the radiator is once again heated as described in point 1;
4. Shutting down the system again and waiting for it to cool as described in point 2;

After several cycles, and after the environmental temperature has started to rise, the heating time will remain more or less the same, but the cooling time will continually increase.

The method is operational with the above-mentioned methods for the entire period of time that it is desired to keep the heating on, without ever shutting it down.

## Claims

1. A system for controlling a heating plant, said plant comprising a boiler (2) inside of which there is a chamber for heating a liquid, a plurality of feed pipes (3) through which the hot liquid is fed into a plurality of radiators (4) and a plurality of return pipes (5) by means of which the radiator liquid is returned to the boiler, at least one environmental thermostat (6) adapted to measuring the temperature in the environment in which the system operates,
**characterised in** comprising a system control unit, supplied directly by an electrical feed line, and connected to the environmental thermostat (6) and the boiler (2), connected in such a way that when the thermostat automatically starts-up the boiler the control unit defines the boiler on and off times, in a variable manner depending on pre-set activation times.

2. The system according to claim 1, wherein said unit comprises a relay (81) for starting up the boiler, a first programmable timer (82) which activates said relay and a second programmable timer (83), arranged in parallel with the relay and adapted to deactivating said first timer.

3. The system according to 1, wherein, on the radiator located furthest from the boiler is installed a temperature detector which is connected wirelessly to said unit, so that the starting-up and shutting-down of the boiler itself are controlled by the temperature changes measured on said radiator.

4. A method for controlling a heating plant, said plant comprising a boiler (2) inside of which there is a chamber for heating a liquid, a plurality of feed pipes (3) through which the hot liquid is fed into a plurality of radiators (4) and a plurality of return pipes (5) by means of which the radiator liquid is returned to the boiler, at least one environmental thermostat (6) adapted to measuring the temperature in the environment in which the system operates,
**characterised in** comprising the following steps:
a) calibrating the system by setting the environmental thermostat and the temperature of the liquid in the boiler,
b) starting-up the plant and measuring the time required to completely heat-up the radiator furthest from the boiler,
c) shutting-down the plant and waiting the length of time required for the aforementioned radiator to cool down,
d) restarting the boiler for the amount of time necessary to ensure that the radiator is once again heated as described in stage b);
e) shutting down the plant again and waiting for it to cool as described in stage c);
f) performing stages b to d cyclically for the entire period of time it is desired to operate the system.

5. The method according to claim 4, wherein in stage c) the plant is shut down for the period of time required for the temperature of the radiator to drop by at least 15- 20 degrees, with respect to the value achieved in stage b).

6. The method according to claim 4, wherein said calibration step comprises the step of setting the environmental thermostat at a preset temperature, without the introduction of any limitations into the time band or in the temperature fluctuations within any of the time bands, so that the plant operates uninterrupted.

7. The method according to claim 4, wherein said calibration step comprises the step of setting the operating temperature of the boiler heating liquid close to the maximum permitted value.
